# FASCICULE DE BREVET EUROPEEN

(11) **EP 3 425 210 B1**
(45) Date de publication et mention de la délivrance du brevet: **25.08.2021**
(21) Numéro de dépôt: 18182176.0
(22) Date de dépôt: 06.07.2018
(51) Int. Cl.: F04D 29/66, F04D 29/54

(54) **AUBE DE TURBOMACHINE COMPRENANT UNE SOURCE ÉLECTROACOUSTIQUE À RENDEMENT ÉNERGÉTIQUE AMÉLIORÉ, RANGÉE D'AUBES DIRECTRICES DE SORTIE ET TURBOMACHINE COMPRENANT UNE TELLE AUBE**
SCHAUFEL EINER STRÖMUNGSMASCHINE UMFASSEND EINE ELEKTROAKUSTISCHE QUELLE MIT VERBESSERTER ENERGIEEFFIZIENZ, REIHE VON AUSLASSLEITSCHAUFELN UND STRÖMUNGSMASCHINE, DIE EINE SOLCHE SCHAUFEL UMFASST
TURBOMACHINE VANE COMPRISING AN ELECTROACOUSTIC SOURCE WITH IMPROVED ENERGY EFFICIENCY, ROW OF OUTLET GUIDE VANES AND TURBOMACHINE EQUIPPED WITH SUCH A VANE

(30) Priorité: 07.07.2017 FR 1756473
(43) Date de publication de la demande: 09.01.2019
(73) Titulaire: SAFRAN AIRCRAFT ENGINES, 75015 Paris (FR)
(72) Inventeur: RIOU, Georges, 77000 Melun (FR); MARDJONO, Jacky, 94130 Nogent sur Marne (FR); JODET, Norman, 94700 Maisons Alfort (FR); GONZALEZ, Jérémy, 77370 La Chapelle Rablais (FR)
(74) Mandataire: Brevalex

(56) Documents cités:
- FR-A1- 2 968 048
- US-A- 5 420 383
- US-A1- 2013 092 471
- US-A1- 2016 146 039
- ZILLMANN J ET AL: "Active Control of Fan Noise by Active Stators", INTERNOISE 2001: THE 2001 INTERNATIONAL CONGRESS AND EXHIBITION ON NOISE CONTROL ENGINEERING, 27 août 2001 (2001-08-27), pages 701-706, XP008139301, ISBN: 978-90-806554-2-3
- VINOGRADOV I AND ZHOU Y: "Active Control of Rotor-Stator Interaction Noise Using Stator-Mounted Actuators", AIAA JOURNAL - THE AMERICAN INSTITUTE OF AERONAUTICS AND ASTRONAUTICS , vol. 53, no. 1 5 septembre 2014 (2014-09-05), 21 février 2018 (2018-02-21), pages 150-160, XP009503647, ISSN: 0001-1452, DOI: 10.2514/1.J053031 Extrait de l'Internet: URL:https://arc.aiaa.org/doi/abs/10.2514/1 .J053031 [extrait le 2018-02-21]

## Description

### DOMAINE TECHNIQUE

La présente invention se rapporte au domaine des aubes pour turbomachine, en particulier pour turbomachine d'aéronef.

L'invention concerne d'une manière générale une aube comportant une source électroacoustique destinée à réduire le bruit provoqué par la rotation des roues aubagées dans les turbomachines d'aéronef.

Dans des modes de réalisation préférés, l'invention est plus particulièrement destinée à la réduction du bruit provoqué par les soufflantes dans les turbomachines à double flux, et notamment du bruit de raies en régime partiel provoqué par l'interaction entre les sillages issus de ces soufflantes et les aubes directrices de sortie, parfois appelées OGV d'après la terminologie anglophone « Outlet Guide Vanes », qui sont disposées en aval de ces soufflantes. Ces aubes directrices de sortie subissent en effet l'impact d'un flux d'air présentant périodiquement un déficit de vitesse, ce qui induit une variation périodique de la charge appliquée sur ces aubes directrices de sortie, cette variation périodique de charge étant à l'origine du bruit de raies précité.

### ÉTAT DE LA TECHNIQUE ANTÉRIEURE

Pour réduire le bruit provoqué par les soufflantes, il a été proposé d'intégrer dans les aubes de stator agencées en aval des soufflantes une source électroacoustique commandée de manière à générer des ondes sonores en opposition de phase par rapport au bruit précité.

Les documents [1] à [3] listés à la fin de la présente description montrent différents exemples d'implémentation de cette technique.

Dans un but d'économie d'énergie, les inventeurs se sont fixés pour objectif d'optimiser le rendement énergétique de ce type de technique.

### EXPOSÉ DE L'INVENTION

L'invention propose à cet effet une aube pour turbomachine comprenant un corps formant deux surfaces aérodynamiques, respectivement d'intrados et d'extrados, ainsi qu'une source électroacoustique. La source électroacoustique comprend deux membranes fixées sur un support solidaire du corps ou formant une partie du corps, et des moyens de mise en vibration des membranes. Le support et les membranes délimitent conjointement une première cavité à l'intérieur du corps, de sorte que les membranes soient agencées de deux côtés opposés de la première cavité.

Selon l'invention, les membranes sont agencées entre les deux surfaces aérodynamiques. De plus, une première surface aérodynamique parmi les deux surfaces aérodynamiques comporte une première région agencée en regard d'une première membrane parmi les membranes et permettant le passage d'ondes acoustiques. Enfin, les membranes et les moyens de mise en vibration des membranes sont configurés de sorte que les membranes vibrent en opposition de phase et selon une même direction d'émission en appliquant, au support, des forces respectives dont la force résultante est sensiblement nulle.

D'une manière générale, l'invention permet ainsi de faire en sorte que les efforts appliqués localement au support par les membranes, en réaction au mouvement vibratoire de celles-ci, se compensent au sein du support, de sorte qu'aucune résultante de ces efforts ne soit transmise au reste de l'aube. Ainsi, une partie maximale de l'énergie mécanique fournie aux membranes par les moyens de mise en vibration de celles-ci est effectivement mise à profit pour la mise en vibration des membranes, tandis que l'énergie mécanique perdue sous forme de déformations du corps de l'aube peut être minimisée.

Suivant d'autres aspects avantageux de l'invention, l'aube comporte une ou plusieurs des caractéristiques suivantes ainsi que défini dans les revendications annexées:
- une seconde surface aérodynamique parmi les deux surfaces aérodynamiques comporte une seconde région, agencée en regard d'une seconde membrane parmi les membranes, et permettant le passage d'ondes acoustiques ;
- une seconde membrane parmi les membranes, et l'un au moins parmi le corps et le support, délimitent conjointement une seconde cavité séparée de la première cavité, la seconde cavité débouchant au travers d'au moins une ouverture du côté de la première surface aérodynamique, et la seconde cavité étant fermée du côté opposé ;
- les membranes sont semblables, et les moyens de mise en vibration des membranes sont configurés de sorte que les vibrations des membranes soient de même amplitude ;
- les membranes sont symétriques l'une de l'autre par rapport à un plan de symétrie orthogonal à la direction d'émission ;
- la première cavité est sensiblement symétrique par rapport au plan de symétrie ;
- la première cavité est raccordée à un conduit d'équilibrage de pression ;
- la première cavité est fermée.

L'invention concerne également une rangée annulaire d'aubes directrices de sortie pour turbomachine, comprenant au moins une aube du type décrit ci-dessus.

L'invention concerne encore une turbomachine, comprenant au moins une aube du type décrit ci-dessus ou une rangée annulaire d'aubes directrices de sortie du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une demi-vue schématique partielle en section axiale d'une turbomachine à double flux pour aéronef ;
- la figure 2 est une vue schématique partielle en section d'une aube directrice de sortie selon un premier mode de réalisation préféré de l'invention, appartenant à la turbomachine de la figure 1 ;
- les figures 3 à 5 sont des vues semblables à la figure 2, illustrant respectivement des aubes directrices de sortie selon d'autres modes de réalisation préférés de l'invention.

Dans l'ensemble de ces figures, des références numériques identiques peuvent désigner des éléments identiques ou analogues.

### EXPOSÉ DÉTAILLÉ DE MODES DE RÉALISATION PRÉFÉRÉS

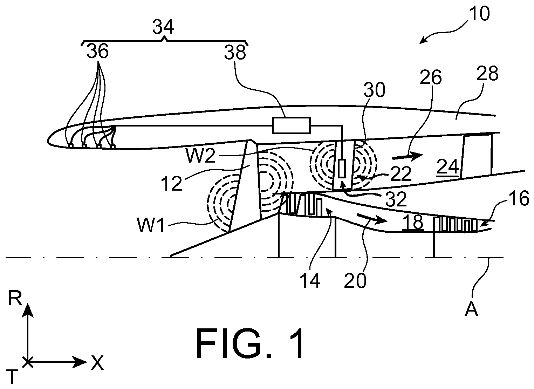

La figure 1 illustre une partie d'une turbomachine d'aéronef 10 à double flux comprenant notamment une soufflante 12, un compresseur basse pression 14 et un compresseur haute pression 16 agencés dans un espace 18 d'écoulement d'un flux primaire 20 de la turbomachine, ainsi qu'une rangée annulaire 22 d'aubes directrices de sortie s'étendant au travers d'un espace 24 d'écoulement d'un flux secondaire 26 de la turbomachine délimité extérieurement par une nacelle 28 de cette turbomachine.

Dans l'ensemble de cette description, la direction axiale X est la direction d'un axe longitudinal A de la turbomachine correspondant à un axe de rotation des rotors de celle-ci, la direction radiale R est en tout point une direction orthogonale à la direction axiale X et interceptant cette dernière, et la direction tangentielle T est en tout point orthogonale aux deux directions précédentes. Par ailleurs, les directions « amont » et « aval » sont définies par référence à l'écoulement général des gaz dans la turbomachine.

La rangée annulaire 22 d'aubes directrices de sortie comprend un ensemble d'aubes 30 dont certaines au moins intègrent une source électroacoustique 32.

D'une manière connue en soi, la turbomachine comprend des moyens de commande 34 pour commander les sources électroacoustiques 32 respectives des aubes directrices de sortie, lesquels moyens sont configurés de manière à minimiser une grandeur mesurée par un, ou de préférence plusieurs, capteurs acoustiques 36.

La grandeur minimisée par les moyens de commande 34 peut être l'intensité sonore globale ou l'intensité sonore mesurée dans une bande de fréquences prédéterminée, par exemple dans une bande de fréquences centrée sur la fréquence de rotation de la soufflante 12 de la turbomachine.

Les moyens de commande 34 sont par exemple logés dans la nacelle 28, et comportent une unité électronique 38 destinée à recevoir des informations en provenance des capteurs acoustiques 36 et à mettre en œuvre un algorithme de commande de la source électroacoustique 32 de chaque aube 30, selon le principe d'une boucle de rétroaction.

Les capteurs acoustiques 36 sont avantageusement intégrés à la nacelle 28, par exemple à proximité de son extrémité amont, c'est-à-dire au niveau de la manche d'entrée de la turbomachine, pour permettre une mesure du bruit émis vers l'amont par la soufflante 12. En variante, certains ou tous les capteurs acoustiques 36 peuvent être agencés au niveau d'une tuyère secondaire de la turbomachine (non visible sur la figure 1) pour permettre une mesure du bruit émis vers l'aval par la soufflante 12.

En fonctionnement, l'interaction entre les sillages générés par les aubes de la soufflante 12 en rotation et les aubes de la rangée annulaire 22 d'aubes directrices de sortie peut être à l'origine de l'émission d'ondes sonores W1 se propageant vers l'amont et vers l'aval depuis les aubes de la soufflante 12.

La source électroacoustique 32 de chaque aube 30 de la rangée annulaire 22 d'aubes directrices de sortie est commandée pour générer des ondes sonores W2 de nature à induire des interférences destructives avec les ondes sonores W1 provenant de la soufflante 12, de manière à minimiser l'intensité sonore mesurée par les capteurs acoustiques 36.

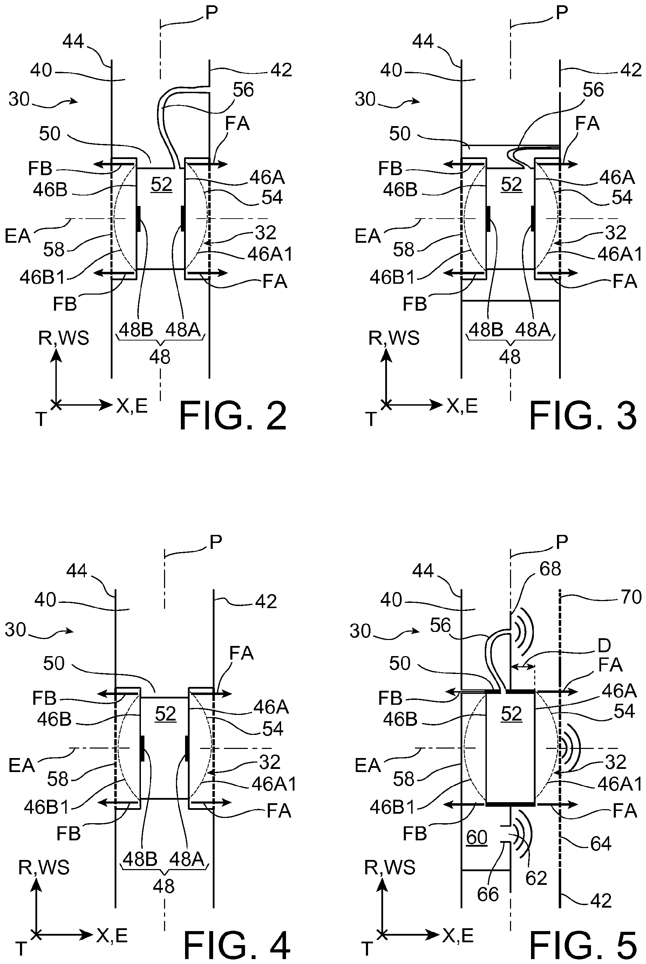

La figure 2 illustre plus en détail une partie d'une aube 30 selon un premier mode de réalisation de l'invention, cette aube 30 étant destinée à faire partie de la rangée annulaire 22 d'aubes directrices de sortie de la turbomachine 10 de la figure 1. Les figures 3-5 illustrent des aubes 30 selon d'autres modes de réalisation préférés de l'invention, comme cela apparaîtra plus clairement dans ce qui suit.

Sur les figures 2-5, la direction axiale X correspond à la direction de l'axe longitudinal A de la turbomachine 10 lorsque l'aube 30 est intégrée à la rangée annulaire 22 d'aubes directrices de sortie au sein de la turbomachine 10. Dans ces mêmes conditions, la direction allant d'un pied (non visible) de l'aube 30 vers un sommet de celle-ci (non visible), appelée direction d'envergure WS de l'aube, coïncide avec la direction radiale R.

L'aube 30 comprend un corps 40 formant deux surfaces aérodynamiques, respectivement d'intrados 42 et d'extrados 44, et comporte la source électroacoustique 32 précitée.

La source électroacoustique 32 comprend deux membranes 46A, 46B et des moyens de mise en vibration des membranes 48.

Les membranes 46A, 46B sont fixées sur un support 50. Dans le mode de réalisation de la figure 2, ainsi que dans les modes de réalisation des figures 4 et 5, le support 50 est constitué par une partie du corps 40.

En variante, le support 50 peut être un élément distinct du corps 40, et monté dans une ouverture de ce dernier, par exemple par encastrement, comme le montre la figure 3.

Les moyens de mise en vibration 48 sont par exemple constitués de deux plaques piézoélectriques 48A, 48B respectivement appliquées sur des régions centrales des deux membranes 46A, 46B de manière à former deux ensembles bilames. Dans un tel ensemble, une élongation de la plaque piézoélectrique induit une déformation de la membrane, d'une manière bien connue. Sur les figures 2-5, les membranes 46A, 46B sont ainsi représentées en trait plein dans une conformation de repos, et en trait discontinu, référencé respectivement 46A1 et 46B1, dans une conformation d'élongation.

Les membranes 46A, 46B sont fixées au support 50 par leurs périphéries respectives.

Le support 50 et les membranes 46A, 46B délimitent conjointement une première cavité 52 à l'intérieur du corps 40, de sorte que les deux membranes 46A, 46B soient agencées de deux côtés opposés de la première cavité 52.

Selon le principe le plus général de l'invention, les membranes 46A, 46B sont agencées entre les deux surfaces aérodynamiques 42 et 44.

De plus, une première surface aérodynamique parmi les deux surfaces aérodynamiques, par exemple la surface d'intrados 42, comporte une première région 54 agencée en regard d'une première membrane 46A parmi les membranes, et permettant le passage d'ondes acoustiques.

Enfin, les membranes 46A, 46B et les moyens de mise en vibration des membranes 48 sont configurés de sorte que les membranes vibrent en opposition de phase et selon une même direction d'émission E (de préférence parallèle à la direction axiale X) en appliquant, au support 50, des forces respectives FA, FB dont la force résultante est sensiblement nulle. Par « opposition de phase », il faut comprendre que lorsque l'une des membranes se déplace dans un sens, par exemple vers la gauche sur les figures, l'autre membrane se déplace dans l'autre sens, par exemple vers la droite sur les figures.

Cette dernière caractéristique est notamment rendue possible par le fait que les membranes 46A, 46B sont agencées entre les deux surfaces aérodynamiques 42 et 44, de sorte que les formes et les orientations respectives des membranes 46A, 46B ne sont pas imposées par les formes respectives des surfaces aérodynamiques 42 et 44.

D'une manière générale, l'invention permet ainsi de faire en sorte que les efforts appliqués localement au support 50 par les membranes 46A, 46B, en réaction au mouvement vibratoire de celles-ci, se compensent au sein du support 50, qui est soit une partie du corps 40 relativement proche des membranes 46A, 46B, soit un élément distinct du corps 40. Ainsi, aucune résultante de ces efforts n'est transmise, selon le cas, au reste du corps 40 ou à l'intégralité de celui-ci. De ce fait, une partie maximale de l'énergie mécanique fournie aux membranes 46A, 46B par les moyens de mise en vibration 48 est effectivement mise à profit pour la mise en vibration des membranes, tandis que l'énergie mécanique perdue sous forme de déformations du corps 40 est minimisée.

Pour parvenir à un tel résultat, il est avantageux que les membranes 46A, 46B soient semblables, et les moyens de mise en vibration des membranes 46A, 46B soient configurés de sorte que les vibrations des membranes soient de même amplitude.

D'autres configurations sont néanmoins possibles afin de parvenir à l'annulation de la force résultante des forces FA et FB.

Ainsi, l'une des membranes peut être plus petite que l'autre membrane mais présenter une masse surfacique plus élevée que l'autre membrane, afin d'être globalement de masse égale à la masse de l'autre membrane.

En variante, l'une des membranes peut être de masse inférieure à la masse de l'autre membrane, mais présenter une amplitude de vibration supérieure à celle de l'autre membrane.

Dans tous les cas, l'annulation de la résultante des forces FA et FB est obtenue lorsque le produit de la masse par l'accélération de l'une des membranes (intégré sur la surface de la membrane) est égal au produit de la masse par l'accélération de l'autre membrane (également intégré sur la surface de cette autre membrane).

De plus, les membranes 46A, 46B sont de préférence symétriques l'une de l'autre par rapport à un plan de symétrie P orthogonal à la direction d'émission E, comme le montrent les figures 2-5.

Les membranes 46A, 46B sont de ce fait centrées sur un même axe d'émission EA, ce qui a pour avantage supplémentaire de minimiser également le moment résultant des forces FA et FB. La réduction de l'énergie mécanique dissipée par déformation du corps 40 de l'aube est ainsi optimale.

En outre, la première cavité 52 est de préférence sensiblement symétrique par rapport au plan de symétrie P, comme le montrent également les figures 2-5.

Cette dernière caractéristique de symétrie permet de simplifier au mieux les chemins d'efforts entre les membranes 46A, 46B et le support 50.

Dans les modes de réalisation des figures 2, 3 et 5, la première cavité 52 est raccordée à un conduit d'équilibrage de pression 56 qui débouche par exemple dans la surface d'intrados 42.

Le conduit d'équilibrage de pression 56 permet d'équilibrer la pression interne de la première cavité 52 avec la pression du milieu extérieur à l'aube 30, de sorte que la déformation des membranes 46A, 46B ne soit pas perturbée par la pression au sein de la première cavité 52.

Le conduit d'équilibrage de pression 56 permet ainsi, d'une manière générale, de simplifier la commande des moyens de mise en vibration des membranes 48.

En variante, la première cavité 52 peut être fermée, comme le montre la figure 4.

Il est à noter que la notion de première cavité « sensiblement symétrique » par rapport au plan de symétrie P signifie que la première cavité 52 est symétrique par rapport au plan de symétrie P abstraction faite du raccordement de la cavité au conduit d'équilibrage de pression 56, le cas échéant.

Dans les modes de réalisation des figures 2-4, une seconde surface aérodynamique parmi les deux surfaces aérodynamiques, par exemple la surface d'extrados 44, comporte une seconde région 58, agencée en regard d'une seconde membrane 46B parmi les membranes, et permettant le passage d'ondes acoustiques.

Les ondes acoustiques générées par les deux membranes sont ainsi respectivement transmises au travers des deux surfaces aérodynamiques 42 et 44 et se propagent à l'extérieur de l'aube dans des directions respectives opposées.

En revanche, dans le mode de réalisation de la figure 5, le corps 44, le support 50, et une seconde membrane 46B parmi les deux membranes précitées, délimitent conjointement une seconde cavité 60 séparée de la première cavité 52. La seconde cavité 60 débouche au travers d'une ouverture 62 du côté de la première surface aérodynamique ou surface d'intrados 42, c'est-à-dire du même côté que la première membrane 46A. De plus, la seconde cavité 60 est fermée du côté opposé, en l'occurrence du côté de la surface d'extrados 44.

Ainsi, au lieu que l'onde acoustique émise par la seconde membrane 46B se propage à l'extérieur de l'aube dans une direction opposée à la direction de propagation de l'onde émise par la première membrane 46A, l'onde acoustique émise par la seconde membrane 46B se propage au sein de la seconde cavité 60 de manière à être renvoyée en direction de la première surface aérodynamique ou surface d'intrados 42, en passant au travers de l'ouverture 62. L'onde acoustique émise par la seconde membrane 46B interfère alors de manière constructive avec l'onde acoustique émise par la première membrane 46A, moyennant un déphasage approprié entre l'ouverture 62 et la première membrane 46A, et un dimensionnement approprié de la seconde cavité 60. Un tel déphasage est matérialisé sur la figure 5 par le décalage D entre l'ouverture 62 et la première membrane 46A selon la direction d'émission E.

Dans ce cas, la première surface aérodynamique ou surface d'intrados 42 présente une troisième région 64 agencée en regard de l'ouverture 62 et permettant le passage d'ondes acoustiques. La troisième région 64 et la première région 54 peuvent être contigües, comme sur la figure 5.

En variante, en fonction de la conformation du support 50, du corps 40, et de la seconde cavité 60, cette dernière peut être entièrement délimitée par la seconde membrane 46B et le corps 40, ou par la seconde membrane 46B et le support 50.

En outre, le rendement acoustique de la seconde membrane 46B peut être optimisé en formant l'ouverture 62 à l'extrémité d'un col 66 dimensionné pour former un résonateur de Helmholtz.

Par ailleurs, quelle que soit la configuration (traversante ou non traversante) de la source électroacoustique 32, il est possible d'exploiter la fluctuation de pression produite à l'intérieur de la première cavité 52 afin de produire une source acoustique additionnelle à la sortie du conduit d'équilibrage de pression 56 en dimensionnant de manière adéquate ce conduit pour qu'il forme un résonateur de Helmholtz, comme cela est schématisé sur la figure 5.

Dans ce cas, le conduit d'équilibrage de pression 56 peut déboucher au travers d'une paroi interne 68 de l'aube, à distance de la surface aérodynamique 42 correspondante, auquel cas cette dernière comporte une autre région 70 agencée en regard de la sortie du conduit d'équilibrage de pression 56 et permettant le passage d'ondes acoustiques.

Dans l'exemple illustré, et de manière tout-à-fait facultative, la paroi interne 68 présente le même décalage D par rapport à la première membrane 46A, selon la direction d'émission E, que l'ouverture 62 précitée.

D'autres variantes sont possibles sans sortir du cadre de l'invention défini par les revendications annexées.

Par exemple, l'aube en configuration non traversante de la figure 5 peut être dépourvue de conduit d'équilibrage de pression, et/ou être prévue avec un support distinct du corps 40 de l'aube.

D'une manière générale, chacune des régions configurées pour permettre le passage des ondes acoustiques peut par exemple consister en une ouverture agencée dans la surface aérodynamique correspondante de l'aube, cette ouverture pouvant préférentiellement être recouverte d'une toile tissée ou d'une paroi présentant des microperforations.

### BILBIOGRAPHIE

[1]: ZILLMANN J ET AL. "Active Control of Fan Noise by Active Stators" INTERNOISE 2001: THE 2001 INTERNATIONAL CONGRESS AND EXHIBITION ON NOISE CONTROL ENGINEERING, 27 août 2001 (2001-08-27), pages 701-706, The Hague;
[2] : GENOULAZ N ET AL: "Experimental Validation of an Active Stator Technology Reducing Turbofan Engine Noise", 13th AIAA/CEAS AEROACOUSTICS CONFERENCE, AIAA 2007-3688, AMERICAN INSTITUTE OF AERONAUTICS AND ASTRONAUTICS, 21 mai 2007 (2007-05-21), pages 1-18, RESTON, VA ISBN: 978-1-56347-883-3
[3]: Demande de brevet FR 2 968 048 A1

## Revendications

1. Aube (10) pour turbomachine comprenant un corps formant deux surfaces aérodynamiques, respectivement d'intrados (42) et d'extrados (44), ainsi qu'une source électroacoustique (32),
dans laquelle la source électroacoustique (32) comprend deux membranes (46A, 46B) fixées sur un support (50) solidaire du corps ou formant une partie du corps, et des moyens de mise en vibration des membranes (48),
dans laquelle le support (50) et les membranes (46A, 46B) délimitent conjointement une première cavité (52) à l'intérieur du corps (40), les membranes étant agencées de deux côtés opposés de la première cavité, et
dans laquelle les membranes (46A, 46B) sont agencées entre les deux surfaces aérodynamiques (42, 44), une première surface aérodynamique (42) parmi les deux surfaces aérodynamiques comporte une première région (54) agencée en regard d'une première membrane (46A) parmi les membranes et permettant le passage d'ondes acoustiques,
**caractérisée en ce que**
les membranes (46A, 46B) et les moyens de mise en vibration des membranes (48) sont configurés de sorte que les membranes (46A, 46B) vibrent en opposition de phase et selon une même direction d'émission (E), moyennant quoi lorsque l'une des membranes (46A) se déplace dans un sens, l'autre membrane (46B) se déplace dans l'autre sens, de sorte que les membranes (46A, 46B) appliquent, au support (50), des forces respectives (FA, FB) dont la force résultante est sensiblement nulle.

2. Aube selon la revendication 1, dans laquelle une seconde surface aérodynamique (44) parmi les deux surfaces aérodynamiques comporte une seconde région (58), agencée en regard d'une seconde membrane (46B) parmi les membranes, et permettant le passage d'ondes acoustiques.

3. Aube selon la revendication 1, dans laquelle une seconde membrane (46B) parmi les membranes, et l'un au moins parmi le corps (40) et le support (50), délimitent conjointement une seconde cavité (60) séparée de la première cavité (52), la seconde cavité (60) débouchant au travers d'au moins une ouverture (62) du côté de la première surface aérodynamique (42), et la seconde cavité (60) étant fermée du côté opposé.

4. Aube selon l'une quelconque des revendications 1 à 3, dans laquelle les membranes (46A, 46B) sont semblables, et les moyens de mise en vibration des membranes (48) sont configurés de sorte que les vibrations des membranes soient de même amplitude.

5. Aube selon la revendication 4, dans laquelle les membranes (46A, 46B) sont symétriques l'une de l'autre par rapport à un plan de symétrie (P) orthogonal à la direction d'émission (E).

6. Aube selon la revendication 5, dans laquelle la première cavité (52) est sensiblement symétrique par rapport au plan de symétrie (P).

7. Aube selon l'une quelconque des revendications 1 à 6, dans laquelle la première cavité (52) est raccordée à un conduit d'équilibrage de pression (56).

8. Aube selon l'une quelconque des revendications 1 à 6, dans laquelle la première cavité (52) est fermée.

9. Rangée annulaire d'aubes directrices de sortie (22) pour turbomachine, **caractérisée en ce qu'**elle comprend au moins une aube (30) selon l'une quelconque des revendications 1 à 8.

10. Turbomachine, **caractérisée en ce qu'**elle comprend au moins une aube (30) selon l'une quelconque des revendications 1 à 8 ou une rangée annulaire d'aubes directrices de sortie (22) selon la revendication 9.

## Patentansprüche

1. Schaufel (10) für eine Strömungsmaschine mit einem Körper, der zwei aerodynamische Flächen, nämlich eine Unterseite (42) und eine Oberseite (44), bildet, sowie mit einer elektroakustischen Quelle (32),
wobei die elektroakustische Quelle (32) zwei Membrane (46A, 46B), die auf einem Träger (50) befestigt sind, welcher mit dem Körper fest verbunden ist oder einen Teil des Körpers bildet, sowie Mittel zum Versetzen der Membrane (48) in Schwingung umfasst,
wobei der Träger (50) und die Membrane (46A, 46B) gemeinsam einen ersten Hohlraum (52) im Inneren des Körpers (40) begrenzen, wobei die Membrane auf zwei gegenüberliegenden Seiten des ersten Hohlraums angeordnet sind, und
wobei die Membrane (46A, 46B) zwischen den zwei aerodynamischen Flächen (42, 44) angeordnet sind, eine erste aerodynamische Fläche (42) der beiden aerodynamischen Flächen einen ersten Bereich (54) umfasst, der einer ersten (46A) der Membranen gegenüberliegt und den Durchtritt von Schallwellen ermöglicht,
**dadurch gekennzeichnet, dass**
die Membrane (46A, 46B) und die Mittel zum Versetzen der Membrane (48) in Schwingung derart konfiguriert sind, dass die Membrane (46A, 46B) gegenphasig und in die gleiche Emissionsrichtung (E) schwingen, wodurch, wenn sich eine der Membranen (46A) in eine Richtung verschiebt, die andere Membran (46B) sich in die andere Richtung verschiebt, so dass die Membrane (46A, 46B) auf den Träger (50) entsprechende Kräfte (FA, FB) aufbringen, deren resultierende Kraft im Wesentlichen null ist.

2. Schaufel nach Anspruch 1, wobei eine zweite aerodynamische Fläche (44) der zwei aerodynamischen Flächen einen zweiten Bereich (58) umfasst, der einer zweiten (46B) der Membranen gegenüberliegt und den Durchtritt von Schallwellen ermöglicht.

3. Schaufel nach Anspruch 1, wobei eine zweite (46B) der Membranen sowie mindestens einer des Körpers (40) und des Trägers (50) gemeinsam einen zweiten Hohlraum (60) begrenzen, der von dem ersten Hohlraum (52) getrennt ist, wobei der zweite Hohlraum (60) durch mindestens eine Öffnung (62) auf der Seite der ersten aerodynamischen Fläche (42) führt und der zweite Hohlraum (60) auf der gegenüberliegenden Seite verschlossen ist.

4. Schaufel nach einem der Ansprüche 1 bis 3, wobei die Membrane (46A, 46B) gleich sind, und die Mittel zum Versetzen der Membrane (48) in Schwingung derart ausgelegt sind, dass die Schwingungen der Membrane dieselbe Amplitude aufweisen.

5. Schaufel nach Anspruch 4, wobei die Membrane (46A, 46B) bezüglich einer Symmetrieebene (P) orthogonal zur Emissionsrichtung (E) zueinander symmetrisch sind.

6. Schaufel nach Anspruch 5, wobei der erste Hohlraum (52) bezüglich der Symmetrieebene (P) im Wesentlichen symmetrisch ist.

7. Schaufel nach einem der Ansprüche 1 bis 6, wobei der erste Hohlraum (52) mit einem Druckausgleichskanal (56) verbunden ist.

8. Schaufel nach einem der Ansprüche 1 bis 6, wobei der erste Hohlraum (52) verschlossen ist.

9. Ringförmige Anordnung der Auslassleitschaufeln (22) für eine Strömungsmaschine, **dadurch gekennzeichnet, dass** sie mindestens eine Schaufel (30) nach einem der Ansprüche 1 bis 8 aufweist.

10. Strömungsmaschine, **dadurch gekennzeichnet, dass** sie mindestens eine Schaufel (30) nach einem der Ansprüche 1 bis 8 oder eine ringförmige Anordnung von Auslassleitschaufeln (22) nach Anspruch 9 umfasst.

## Claims

1. Vane (10) for a turbomachine comprising a body (40) forming two aerodynamic surfaces, namely an intrados surface (42) and an extrados surface (44), and an electroacoustic source (32),
wherein the electroacoustic source (32) comprises two membranes (46A, 46B) fixed on a support fixed to the body or forming part of the body, and means of vibrating the membranes (48),
wherein the support (50) and the membranes (46A, 46B) jointly delimit a first cavity (52) inside the body (40), the membranes being arranged on two opposite sides of the first cavity,
wherein the membranes (46A, 46B) are arranged between the two aerodynamic surfaces (42, 44), a first aerodynamic surface (42) among the two aerodynamic surfaces comprises a first region (54) arranged facing a first membrane (46A) among the membranes and allowing the passage of acoustic waves,
**characterised in that** the membranes (46A, 46B) and the membrane vibration means (48) are configured such that the membranes (46A, 46B) vibrate in phase opposition and along a same emission direction (E), by applying forces (FA, FB) to the support (50) such that the resultant force of said forces is approximately zero.

2. Vane according to claim 1, in which a second aerodynamic surface (44) among the two aerodynamic surfaces comprises a second region (58) arranged facing a second membrane (46B) among the membranes and allowing the passage of acoustic waves.

3. Vane according to claim 1, in which a second membrane (46B) among the membranes, and at least one of the body (40) and the support (50), jointly delimit a second cavity (60) separated from the first cavity (52), the second cavity (60) opening up through at least one opening (62) on the side of the first aerodynamic surface (42), and the second cavity (60) being closed on the opposite side.

4. Vane according to any one of claims 1 to 3, in which the membranes (46A, 46B) are similar, and the means of vibrating the membranes (48) are configured such that the amplitudes of membrane vibrations are the same.

5. Vane according to claim 4, in which the membranes (46A, 46B) are symmetric with each other about a plane of symmetry (P) orthogonal to the emission direction (E).

6. Vane according to claim 5, in which the first cavity (52) is approximately symmetrical about the plane of symmetry (P).

7. Vane according to any one of claims 1 to 6, in which the first cavity (52) is connected to a pressure balancing duct (56).

8. Vane according to any one of claims 1 to 6, in which the first cavity (52) is closed.

9. Annular row of outlet guide vanes (22) for a turbomachine (10), comprising at least one vane (30) according to any one of claims 1 to 8.

10. Turbomachine, comprising at least one vane (30) according to any one of claims 1 to 8 or an annular row of outlet guide vanes (22) according to claim 9.
